Europäisches Patentamt

(19) European Patent Office

Office européen des brevets

(11) EP 0 790 514 A2

## (12) EUROPEAN PATENT APPLICATION

(43) Date of publication:
20.08.1997 Bulletin 1997/34

(51) Int. Cl.⁶: $G02B\ 26/08$, $H04N\ 9/31$

(21) Application number: 97102447.6

(22) Date of filing: 14.02.1997

(84) Designated Contracting States:
DE FR GB IT NL

(30) Priority: 16.02.1996 US 11835

(71) Applicant:
TEXAS INSTRUMENTS INCORPORATED
Dallas Texas 75265 (US)

(72) Inventors:
• Markandey, Vishal
Dallas, TX 75209 (US)

• Dunn, Ronnie N.
McKinney, TX 75069 (US)
• Gove, Robert J.
Los Gatos, CA 95080 (US)
• Pettitt, Gregory S.
Rowlett, TX 75088 (US)

(74) Representative: Schwepfinger, Karl-Heinz, Dipl.-Ing.
Prinz & Partner,
Manzingerweg 7
81241 München (DE)

(54) **A method for displaying spatially offset images using spatial light modulator arrays**

(57) A method for displaying spatially offset images using spatial light modulators. A first spatial light modulator image (10) is overlaid with a second spatial light modulator image (12) slightly offset from the first image such that the resulting image has higher resolution than the spatial light modulator. One or two devices may be used in static imaging. In imaging video data, two devices will be used, with the components of the incoming data being divided between them.

FIG. 1

FIG. 2

**Description**

BACKGROUND OF THE INVENTION

This invention relates to imaging systems, more particularly to those that use spatial light modulator arrays of individual elements.

BACKGROUND OF THE INVENTION

Currently, the standard for most video displays is the cathode-ray tube (CRT) based display device, and for printing is the laser-polygon scanner system. However, the use of spatial light modulators in both of these areas has grown considerably in recent years. Examples of spatial light modulators with arrays of individually addressable elements that are particularly suited for imaging include liquid crystal devices (LCD), digital micromirror devices (DMD™), and actuated mirror arrays (AMA™).

These types of modulators give individual control of each picture element (pixel) of the final image, whether the final image is a video or still display, or a printed image. Since most of these modulators act in either a digital (ON/OFF) fashion, or can mimic that mode, the use of high-speed and performance digital processors on the image data can improve the picture dramatically.

One of the more noticeable artifacts involved with these modulators occurs when they render curved surfaces or diagonals. Because these arrays are typically laid out in a square or rectangular grid for manufacturing reasons, their images follow these grid lines. When rendering a diagonal or curve, the resulting image has a staircase or step effect sometimes referred to as jaggies.

These artifacts can be reduced with higher resolution devices, essentially increasing the number of elements available for the image. Additionally, higher resolution displays allow the display of more information content. However, the more elements on the device, the more complex to manufacture, which in turn results in higher costs. At some point, these extra costs become prohibitive.

Therefore, some method is needed to allow higher resolution imaging without requiring higher resolution devices.

SUMMARY OF THE INVENTION

One aspect of the invention is the use of two spatial light modulator arrays in tandem, where the images of the two arrays are offset from one another by a half pixel width and a half pixel height. The resulting image is perceived to be higher resolution, without requiring high resolution devices. The sampling and processing for each of these devices must be coordinated and timed such that if used for video data, the incoming data is rendered accurately.

It is an advantage of the invention in that it allows higher resolution images to be formed without requiring higher resolution devices.

It is a further advantage of the invention that a higher resolution image can be achieved, thereby allowing the display of more image content, without requiring higher resolution devices.

BRIEF DESCRIPTION OF THE DRAWINGS

For a more complete understanding of the present invention and for further advantages thereof, reference is now made to the following Detailed Description taken in conjunction with the accompanying Drawings in which:

Figure 1 shows images of two modulator arrays offset by one half a pixel width and one half a pixel height in accordance with the present invention;

Figure 2 shows an exploded view of one set of pixels of Figure 1 offset by one half a pixel width and one half a pixel height;

Figures 3a-3c show alternate embodiments of sampling incoming video data and one embodiment of displaying this data on offset spatial light modulators;

Figure 4 shows a color wheel for use with the embodiments illustrated in Figures 3a-3c; and

Figures 5 shows graphically one embodiment of displaying interlaced video data on offset modulators.

DETAILED DESCRIPTION OF THE PREFERRED EMBODIMENTS

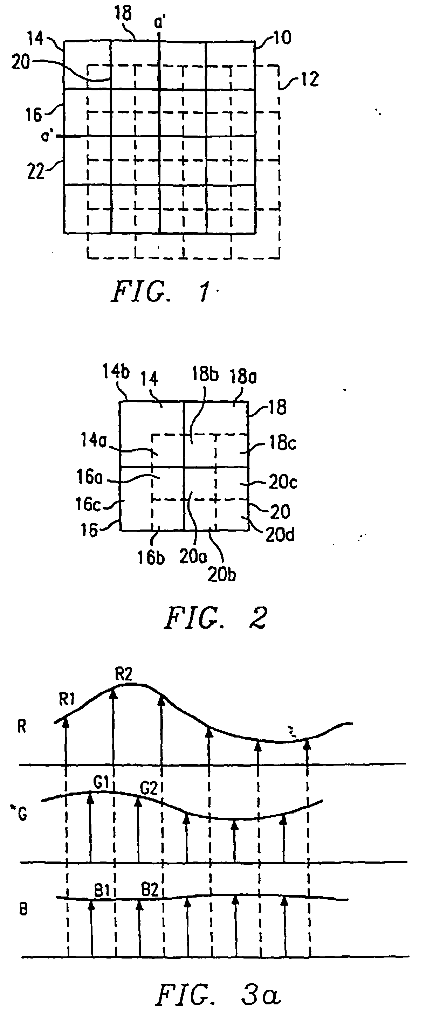

In Figure 1, an example of two images of one or two spatial light modulators is shown. As can be seen the images are offset by one half the pixel width and one half the pixel height. The discussion will be directed around this configuration, but is not intended to limit the offset parameters in any way. The pixels could be offset any width and height of the pixels, but will be less than one full pixel width or one full pixel height.

The first spatial light modulator array image 10 is imaged onto a surface, either a display surface or a printing surface, while the image 12 of a second array is imaged offset from that first array. It should be noted that the images of the array or arrays are offset. If one array is used to generate both images, then obviously the array is not offset from itself. If two arrays are used, they do not have to be offset in any special way, so long as they can be imaged in offset configuration. In the case of using two transparent arrays, such as transmissive LCD panels, it may be desirable to physically offset the arrays themselves.

In Figure 2 an exploded view of the image from Figure 1 has been taken along the intersection of lines a and a' in Figure 1. As is show in this view, the original four pixels 14, 16, 18 and 20 now have subregions that are summations of various combinations of pixels. Pixel 14 has two regions, 14a and 14b. Region 14a has the brightness and color of 1/4ths the pixel 14 on the first modulator array. Region 14b has the brightness and color of 3/4th the brightness and color of pixel 14 on the first modulator image, and 1/4th the brightness and color of pixel 14 on the second modulator image. Pixel 16 has three regions, 16a, 16b, and 16c. Region 16c has 1/2 the brightness and color of pixel 16 on the first modulator image. Region 16a has 1/4th the brightness and color of pixel 14 from the second modulator image, and region 16b has 1/4th the brightness and color of pixel 16 from the second modulator image. Region 18 has the same type of composition, but instead of being a vertical edge pixel, it is a horizontal edge pixel.

Pixel 20 has four regions, 20a, 20b, 20c, and 20d. Region 20a is comprised of 1/4th of pixel 20 from the first modulator image and 1/4th of 1/4th pixel 14 from the second modulator image. Region 20b has 1/4th of pixel 20 from the first modulator image and 1/4th of the pixel 16 from the second modulator image. Region 20c has 1/4th of pixel 20 from the first modulator image and 1/4th the pixel 18 from the second modulator image. Region 20d has 1/4th of pixel 20 from the first modulator image and 1/4th the pixel 20 from the second modulator image.

In actuality, these regions are no longer part of their respective pixels from the first modulator image when displayed or imaged. The perception will be that each region is in and of itself its own pixel. In this manner the higher resolution is achieved.

For imaging applications where the data is static, the data is merely sent to the spatial light modulator arrays in color format. In most printing application the colors will be cyan, magenta, yellow and black. The application could also use only black modulated for shades of gray for monochrome pictures.

The incoming picture is sampled however necessary to most closely copy the picture. The data resulting from the sampling is then sent to an area array modulator, which creates the image on its face and images it onto a surface, which could be a printing substrate such as photographic film. The substrate is then 'exposed' again, the second imaging offsets the array by one pixel width and one pixel height. The resulting picture then has a perceived resolution of twice that of the device or devices used to create it.

The above discussion is only intended as a specific example and is in no way intended to limit other methods of imaging data for printing applications. For example, color printing has several ways to register the other colors for each pixel in the same space, such as applying all colors at once, or creating the entire line in one color and then adding the entire line in the other colors. Additionally, exposure of color film allows for several different approaches.

One key difference between printing applications and display applications is in the continuously flowing data stream of video applications. The incoming data to the display device can be in one of several formats. In the typical system, the incoming data must be sampled for display on an area array spatial light modulator, since each modulator elements require pixel specific information, typically in digital form.

Figure 3a shows one embodiment of a sampling approach. Note that the colors in the video application are assumed to be split between the two modulators, rather than displaying all three colors on both. This saves bandwidth and processing power, and results in the same perceived colors, because the human eye cannot differentiate shades of colors beyond a certain point. It is therefore advantageous to use two modulators to lower the processing and bandwidth requirements. These divisions could be any other combination of the three colors and is only intended to be an example.

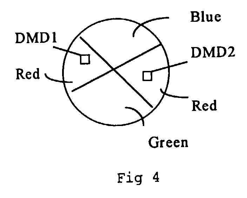

For another possibility, both modulators could display RGB data. Various color combinations can be created to optimize the overall display for color separation. In one embodiment illustrated in Figure 4, using one color wheel and two modulators, the color wheel is divided into four segments, 1/3 green, 1/3 blue, and 2 x 1/6 red segments.

Both modulators would display red at the same time, while in the next segment, one would display green, the other blue. Obviously, other combinations of the colors could be used in this same configuration.

Additionally, the system could use two offset modulators with two color wheels. The modulators would be illuminated such that the first modulator would be receiving red light while the other is receiving green light, with the segments cycling from red to green to blue to red. The colors displayed would then be:

Red (modulator 1) + Green (modulator 2) = Yellow

Blue (modulator 1) + Red (modulator 2) = Magenta

Green (modulator 1) + Blue (modulator 2) = Cyan.

The continuity between the reds, blues and greens between the two modulators can be used to provide complimentary bit split timing helping with artifact mitigation. Other methods of positioning and color splitting can be used to mitigate problems with color separation and flicker.

Additionally, it has been shown that it is possible to induce hues. Edwin Land, in photography experiments, induced the hues of browns and greens by filtering an image with a green filter, and projecting it with clear light, and filtering an image with a red filter and projecting it with red light. It is possible that using two offset modulators in such a manner can be used to induce hues in the final image. All of these possibilities of using two modulators must be coordinated with the sampling and processing of the data before display.

In Figure 3a, the sampling clocks are set up to be offset by one half a sample period. This embodiment will be referred to as "phase offset" sampling. Assume for discussion purposes that the two spatial light modulators are 640 elements per row with 480 rows. The arrows R1, R2, G1, G2, and B1, B2 show the points in time at which samples are taken. Again, this is for an example where the color division between the modulators is red and green/blue.

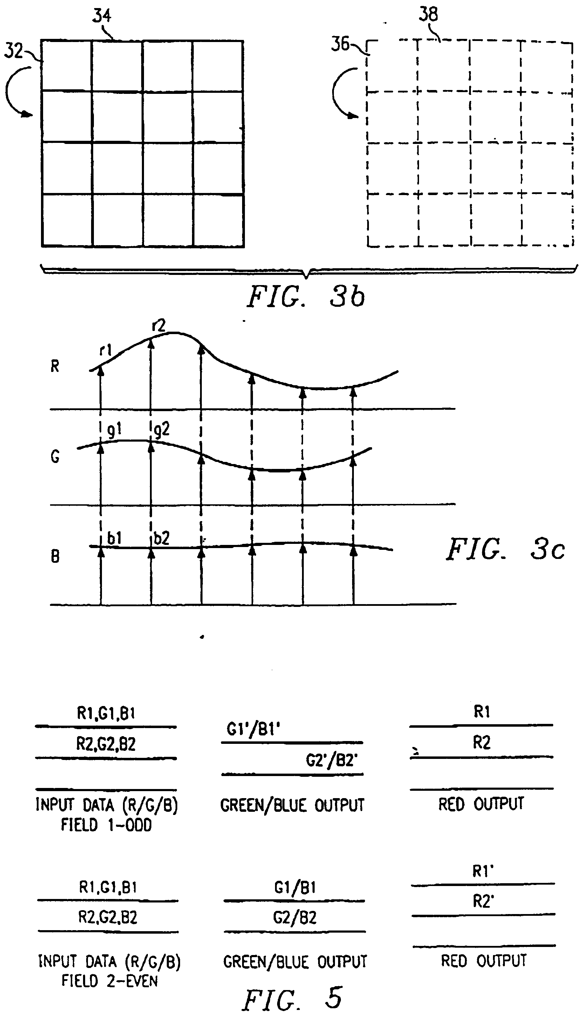

The data would then be displayed on the modulators as shown in Figure 3b. Pixel 32 would be G1/B1, and pixel 34 would be G2/B2. Pixels 36 and 38 would be R1 and R2 respectively. Note that this assumes interlaced data, such that only half of the 480 lines is received at a given time, either the odd or the even numbered lines. In order to display the full 480 lines of data, the data will have to be line doubled for each modulator, as is shown in Figure 3b. The phase offset approach is the least expensive approach, since it requires no interpolation. The data is simply sampled to compensate for the offset and the data is displayed on the appropriate modulator.

Figure 3c shows an embodiment that will require some interpolation. In this embodiment, the sample clocks are aligned, and hence will be referred to as the "phase aligned" approach. The samples are taken as designated by the arrows r1, r2, g1, g2, b1 and b2. Interpolation is then used to create the offset samples for either the red modulator or the green/blue modulator.

One example of interpolation uses the four surrounding pixels of the pixel to be created as shown below:

$$\bullet \ r1 \qquad \bullet \ r2$$
$$\bullet \ r1'$$
$$\bullet \ r3 \qquad \bullet \ r4.$$

The formula to find r1' is:     $r1' = 1/4(r1+r2+r3+r4)$ .

Other more sophisticated filters may be used to achieve more accurate data values. While this approach is conceptually more accurate than the phase offset approach, shown in Figure 3a, it involves the extra cost of interpolation. This data would then be displayed similarly to the method shown in Figure 3b, except that the pixels 32 and 34 would now be g1/b1 and b2/b2, respectively, and pixels 36 and 38 would be pixels r1' and r2', respectively.

In addition to using two 640 x 480 arrays to display data at 1280 x 960 resolution, two smaller resolution modulators could be used to achieve the 640 x 480 resolution. In this example the devices would have 320 elements per row with 240 rows. This is especially applicable to interlaced data, where the arrays are closer to the field dimensions, where two fields make up one frame of data. Each field in interlaced data contains only half of the lines for that frame.

Since odd and even fields are spatially offset from each other, the spatial positioning of one of the modulators is ideal for displaying the Odd field data and the other for Even field data, as shown in Figure 5. However, to display Odd field data on the green/blue modulator and Even field data on the red modulator, interpolation is needed to obtain the samples in the correct spatial location. Thus, in Figure 5, $G1' = 1/2(G1+G2)$  and  $B1' = 1/2(B1+B2)$ . This assumes that the data was sampled using the phase offset sampling method. If the phase aligned approach is used the pixels G1' and B1' would be interpolated as discussed above for r1' and r2'.

Again, both the division of colors between green/blue and red, and the decision as to which color will display which field are intended only as examples. In summary, for this example, the Odd field will be displayed with original data on the red modulator and interpolated data on the green/blue modulator. The Even field will be displayed with original data on the green/blue modulator and the interpolated data on the red modulator.

In the above discussion several choices were made in order to make the discussion easier. For example, the discussion has assumed that the full frame of data for interlaced signals will be achieved by line doubling. However, there are several other ways to perform interlace-to-progressive-scan conversion. With the use of a modulator that is 640 x 480, motion adaptive progressive scan methods can be used. Examples of these methods can be found in further detail in US Patent No.s 5,550,592 and 5,519,451 and in Published European Patent Document No. EP 0,740,468.

For these techniques to work correctly, the RGB data is sampled according to the phase offset technique, or the phase aligned technique plus the required interpolation prior to the application of those methods. For the smaller modulators for field displays (320 x 240), only one field of data can be displayed at a time. While the progressive scan will not be performed to produce one full frame of data, the interpolated data can be created using those techniques.

Similarly, with regard to the dimensions of the devices, scaling techniques can be used on the RGB data for the 640 x 480 devices. Again the data must be sampled by phase offset, or by phase aligned plus the interpolation, prior to the scaling techniques being applied. Examples of these scaling techniques are shown in greater detail in Published European Patent Document No.s EP 0,700,015 and 0,700,016. For the 320 x 240 devices, only one field is displayed at a time, and separate filter coefficients are used for scaling the field data.

Another choice that was made previously to the discussion was that of working with RGB data, rather than YC data. In YC space, the color channel information is encompassed in the YC components, as follows:

$$Red = 1.164(Y\text{-}16) + 1.596(Cr\text{-}128)$$

$$Green = 1.164(Y\text{-}16) - 0.813(Cr\text{-}128) - 0.391(Cb\text{-}128)$$

$$Blue = 1.164(Y\text{-}16) + 2.018(Cb\text{-}128)$$

(assuming a CCIR 601 format where the input range of 16-234 gets expanded to 0-255. The coefficients differ if the input range is 0-255).

By using phase offset sampling, the Cr will be sampled offset from the Y/Cb sampling as shown in Figure 3a, with red being Cr and the green/blue being Y/Cb. The Y data needed to create red samples and Cr data needed to create green samples can then be generated by using interpolation as shown above.

If one were to use the phase aligned approach, as shown in Figure 3c, the Y/Cr data needed to generate red samples is then obtained by interpolation as above.

Finally, using either phase aligned or phase offset sampling and using the samples in the equations above, the system can generate the RGB data. This data is then used as discussed above.

The video processing mode then is far more complex than the static image processing. Additionally, in video processing the images will be created with two devices, while static imaging requires two images, rather than two devices. However, both have the ability to create higher resolution images using lower resolution devices. This keeps the cost of device manufacture lower, thereby lowering system cost.

Thus, although there has been described to this point a particular embodiment for a method and structure for imaging with offset spatial light modulators, it is not intended that such specific references be considered as limitations upon the scope of this invention.

## Claims

1. A method of high resolution imaging, comprising the steps of:

   providing data to be formed into a final image to an imaging system;
   creating a first image of said data onto a substrate using a spatial light modulator of a resolution that forms pixels of a predetermined width and height; and
   creating a second image of said data onto said substrate using a spatial light modulator of a resolution such that said second image is offset from said first image less than said width and said height of one of said pixels, thereby creating an image with a higher resolution than said given resolution..

2. A method for displaying video data using spatially offset spatial light modulator images, comprising the steps of:

   receiving incoming video data;
   dividing said video data into components between a first and a second spatial light modulator, said first and second spatial light modulators have pixels of a given width and height;
   sampling said video data;
   displaying samples of one of said components on said first spatial light modulator;
   displaying samples of others of said components on said second spatial light modulator, such that said displaying step results in an image of said one of said components being offset from an image of said other of said components by less than said width and said height of a pixel.

FIG. 1

FIG. 2

FIG. 3a

*FIG. 3b*

*FIG. 3c*

| R1,G1,B1 | G1'/B1' | R1 |
|---|---|---|
| R2,G2,B2 | G2'/B2' | R2 |
| INPUT DATA (R/G/B) FIELD 1–ODD | GREEN/BLUE OUTPUT | RED OUTPUT |

| R1,G1,B1 | G1/B1 | R1' |
|---|---|---|
| R2,G2,B2 | G2/B2 | R2' |
| INPUT DATA (R/G/B) FIELD 2–EVEN | GREEN/BLUE OUTPUT | RED OUTPUT |

*FIG. 5*

DMD1

Blue

DMD2

Red

Red

Green

Fig 4